Europäisches Patentamt

European Patent Office

Office européen des brevets

(11) Publication number: **0 093 026**
**B1**

(12) **EUROPEAN PATENT SPECIFICATION**

(45) Date of publication of patent specification: **25.06.86**

(51) Int. Cl.⁴: **B 23 H 1/00**

(21) Application number: **83302421.9**

(22) Date of filing: **28.04.83**

---

(54) **Spark erosion machine.**

---

(30) Priority: **28.04.82 JP 70265/82**

(43) Date of publication of application:
**02.11.83 Bulletin 83/44**

(45) Publication of the grant of the patent:
**25.06.86 Bulletin 86/26**

(84) Designated Contracting States:
**DE FR GB IT**

(56) References cited:
**DE-A-3 036 462**
**DE-A-3 038 410**
**DE-A-3 119 472**
**DE-A-3 131 056**
**DE-A-3 141 044**
**DE-A-3 142 606**
**DE-A-3 203 605**

(73) Proprietor: **INOUE-JAPAX RESEARCH INCORPORATED**
**5289 Aza Michimasa Nagatsudacho Midoriku Yokohamashi Kanagawaken 227 (JP)**

(72) Inventor: **Inoue, Kiyoshi**
**16-8 Kamiyoga 3-chome**
**Setagayaku Tokyo (JP)**

(74) Representative: **Williams, John Francis**
**J.F. Williams & Co 34 Tavistock Street**
**London WC2E 7PB (GB)**

Courier Press, Leamington Spa, England.

# Description

The present invention relates to a spark erosion machine and, more particularly, to a spark erosion machine in which work conditions can be properly controlled in response to the progress of the work in a workpiece and/or to the amount of electrode wear.

In a spark erosion machine, as is well-known, a working electrode and a workpiece are brought together with a predetermined gap between them and a pulse-like voltage is applied between the electrode and the workpiece while a working fluid is supplied to the above-mentioned gap interval, thereby causing an electrical discharge to perform the spark erosion.

In such a well-known conventional spark erosion machine, in order to prevent a short circuit or an abnormal arc discharge or the like from occurring between the electrode and the workpiece during the working operation, the movement of the workpiece and the electrode is additionally performed automatically to adjust the width of the working gap in response to the pollution of the working fluid in the working gap and to a change in the discharge current or the like. However, when the working speed (g/min) reduces remarkably or the electrode is excessively worn, the conventional spark erosion machine described above cannot cope with these conditions. Thus, there are problems in that the working operation stops and sufficient work accuracy cannot be obtained.

The present invention seeks to overcome or reduce these problems and to provide a spark erosion machine in which the working conditions are appropriately controlled in response to the progress of work in a workpiece and/or to the amount of electrode wear, thereby enabling a smooth and highly accurate working operation.

According to the present invention, there is provided a spark erosion machine, in which a working gap is formed between a working electrode and a workpiece, a pulse discharge being generated in the working gap while a working fluid is supplied to the electrode and its workpiece, and the electrode and the workpiece are relatively moved to maintaining the proper width of the working gap, characterised in that at least one weight measuring apparatus is provided for measuring the weight of the electrode and/or the workpiece and a control unit is provided for selecting or controlling the working conditions in response to a signal from the weight measuring apparatus. The spark erosion machine may automatically measure the weight(s) of the electrode and/or the workpiece at any time or at predetermined intervals using a high-accuracy weight measuring apparatus; calculate the difference between the actual weight on the basis of its measured value and a predetermined weight, and the amount of electrode wear etc using a microcomputer; and suitably select, change, or control the working conditions in accordance with the calculated data, thereby maintaining the optimum working conditions.

The weight of the workpiece may be measured together with a work tank after the working fluid has been drained out, thereby interrupting the working operation temporarily. Otherwise the weight of the workpiece may be measured while the workpiece is dipped in the working fluid. The weight of the electrode may be obtained by measuring the electrode which is automatically removed after temporarily interrupting the working operation. However, it may be measured with the electrode in its working location in the working fluid.

Various well-known accurate balances or force measuring apparatus may be used as the weight measuring apparatus. A microcomputer including a numerical control unit may be used as the control unit.

The invention will now be described in greater detail, by way of example, with reference to the drawings, in which:

Fig. 1 is a schematic drawing illustrating an embodiment of a spark erosion machine according to the present invention;

Fig. 2 is a schematic drawing illustrating an embodiment of a weight measuring apparatus which can measure the weight of a workpiece sunk in the working fluid;

Fig. 3 is a schematic drawing illustrating another embodiment of the weight measuring apparatus which can measure the weight of a workpiece sunk in the working fluid; and

Fig. 4 is a schematic drawing illustrating an embodiment of the weight measuring apparatus which can measure the weight of an electrode without removing the electrode from its working location.

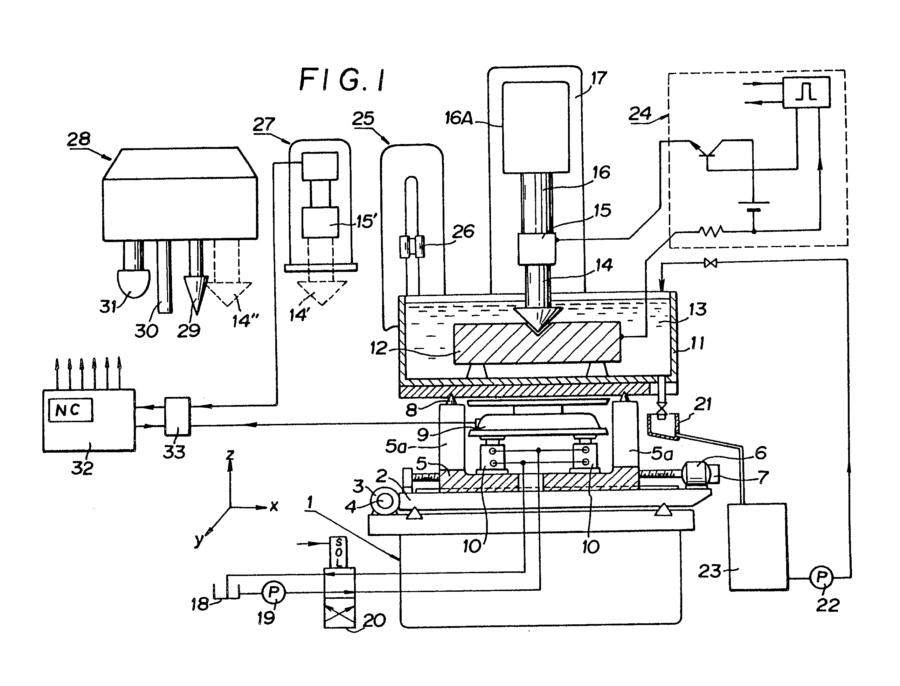

In Figs. 1 to 4, the same elements and components having same or similar functions are designated by the same reference numerals.

Referring to Fig. 1, a reference numeral 1 indicates the main body of a spark erosion machine; 2 denotes a work moving table for movement in the Y direction; 3 shows a motor for drawing the table 2; 4 is an encoder; 5 is a work moving table for movement in the X direction; 6 is a motor for drawing the table 5; 7 is an encoder; 8 are conical guides; 9 is an electrode balance with large range and high accuracy; 10 are hydraulic jacks; 11 is a work tank; 12 is a workpiece; 13 is a working fluid; 14 is an electrode; 15 is a chuck for holding the electrode 14; 16 is a stem, 16A is a servo-controlled moving system for movement of the electrode 14 in the Z direction; 17 is a column; 18 is an oil tank for supplying working oil to the hydraulic jacks 10; 19 is an oil pump; 20 is a four-way valve; 21 is a service tank; 22 is a pump; 23 is a working fluid treating apparatus for filtration of the working fluid and the adjustment of its concentration; 24 is a power circuit for the spark erosion; 25 is an automatic electrode exchanging apparatus; 26 is a swing arm for exchanging the electrode; 27 is an electrode balance for measuring the weight of the electrode; 28 is an electrode magazine; 29, 30 and 31 are electrodes with different end shapes; 32 is a control unit including a numerical control unit (hereinafter, referred to as an NC); and 33 is a microcomputer.

The control unit 32 including the NC serves to control integrally the entire working processes, namely, the positioning of the parts in the X-, Y-, and Z-directions, working movement, vertical reciprocation of the electrode, exchange of the electrode, power supply for operation etc.

Four parts 5a are mounted at the four corners of the work table 5, and the conical guides 8 are mounted on each part in order to position the work tank 11. The work tank 11 is mounted on the parts 5a so that it engages these conical guides 8. The workpiece 12 is carried in the work tank 11 and is sunk in the working fluid 13. The working fluid 13 is drained from the work tank 11 if necessary, and supplied to the work tank 11 again via the service tank 21, working fluid treating apparatus 23 and pump 22.

The electronic balance 9 with a large range has a high accuracy of, for example, a factor of one to 100 thousandths (1/100.000) or better, and is mounted on the hydraulic jacks 10 on the work moving table 5. With such a construction, when the working oil in the oil tank 18 is supplied to the hydraulic jacks 10 via the four-way valve 20 by means of the oil pump 19, the electronic balance 9 moves vertically. When it moves upward, the work tank 11 is removed from the poles 5a and is supported by the balance 9, which measures the weight of the work tank 11 and the workpiece 12. This measuring operation is performed in accordance with the program of the control unit 32.

Upon measuring, the working fluid 13 in the work tank 11 is entirely drained and the inside of the work tank is completely cleaned by clean working fluid jetted from a working fluid jet nozzle (not shown).

The swing arm 26 of the automatic electrode exchanging apparatus 25 sequentially takes out a predetermined electrode 14 from the electrode magazine 28 in response to a command from the control unit 32. After the weight of the electrode 14 has been measured by the electrode balance 27, the arm 26 attaches the electrode 14 to the electrode chuck 15. When a predetermined work operation has been completed, it detaches the electrode 14 from the electrode chuck 15 and the after, the weight of the electrode 14 has been measured by the electronic balance 27, the swing arm 26 returns the electrode 14 to the electrode magazine 28. Thereafter, the swing arm 26 selects the electrode necessary for the next operation from the electrodes 29, 30, 31, etc, and, after measuring the weight thereof, attaches it to the electrode chuck 15.

The electronic balance 27 for measuring the weight of the electrode is attached to the main body 1 of the spark erosion machine or to the electrode magazine 28. While measuring the weight of the electrode, it is preferable to hold the electrode in an electrode chuck 15' which is similar to the electrode chuck 15.

In Fig. 1, reference numerals 14' and 14" denote the electrode 14 which is being measured and which is sorted in the electrode magazine 28, respectively.

It may be possible to attach the electrode holders to the electrodes 14, 29, 30 and 31 to hold each of them with their holder respectively. Thereby exchange of the holder with the electrode takes place and the weight of the combined. electrode holder is measured.

Both the values measured by the electronic balances 9 and 27 are, or the measured value by either of them is fed to a microcomputer 33, and the quantity of work, amount of electrode wear, electrode wear ratio, etc are calculated on the basis of these measured values, and they are then compared with a predetermined value. Thus, the microcomputer 33 and the control unit 32 including the NC appropriately select, change, or control the working conditions in accordance with these data to permit the shift to the next working step and to optimize the working conditions, thereby maintaining the desired working speed and accuracy.

In the above-described embodiment, upon measuring the weight of the workpiece 12, the working fluid 13 in the work tank 11 is drained and the extraneous articles produced by the spark erosion are washed away from the workpiece and the internal surfaces of the work tank. Thereafter the weight of the workpiece together with the work tank is measured. It may be possible, however, to measure the weight of the workpiece with the working fluid in the work tank.

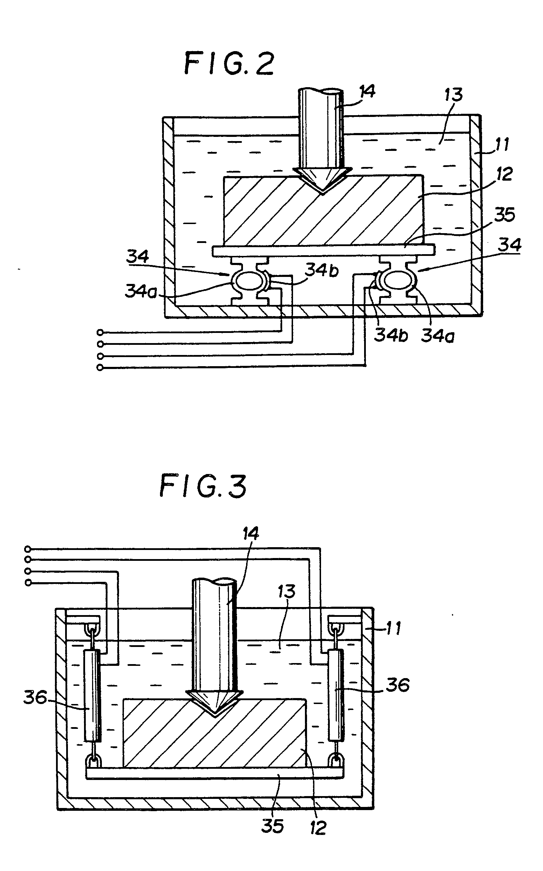

Fig. 2 shows for example, force measuring apparatus 34 which are attached to the bottom of the work tank 11. The workpiece 12 is placed on a mounting table 35 attached to the force measuring apparatus 34 which thereby measure the weight of the workpiece. The force measuring apparatus 34 comprises a ring-like main body 34a and a strain gauge 34b attached to the side thereof. The weight of the workpiece is measured by the strain gauge 34b which detects and measures the deformation of the main body 34a caused by the weight of the workpiece 12. The measurement by the force measuring apparatus 34 is carried out when the electrical discharge is stopped temporarily so that the pressure of the discharge has no affect on the measurement. The output of the strain gauges 34b and are fed to the microcomputer 33 in the same way as shown in Fig. 1, thereby allowing the control unit 32 to control the working conditions thereafter on the basis of the operational results.

When the weight of the workpiece 12 changes during the working operation and, accordingly, when the deformation of the main body 34a of the force measuring apparatus changes, the workpiece 12 itself is also deflected upwardly; however, this deflection is very small and can be easily calculated from the measured value by the strain gauge 34b, so that the working depth can be corrected as a result of a compensating calculation.

Referring to a third embodiment shown in Fig. 3, the weight of the workpiece 12 can be measured with the working fluid filling the work tank 11. The mounting table 35 is suspended in the work tank by suspension-type force measuring apparatus 36 which allows the weight of the workpiece 12 mounted on the mounting table 35 to be measured by the suspension-type force measuring apparatus 36. The outputs of the suspension-type force measuring apparatus 36 are fed to the microcomputer 33 in the same way as in the embodiment described previously, thereby allowing the control unit 32 to control the working conditions thereafter on the basis of the operational results.

In the first embodiment shown in Fig. 1, the weight of the electrode 14 is measured by removing the electrode from the chuck 15 and attaching it to the electronic balance 27. However, it is also possible to measure the weight of the electrode while continuing the electrical discharge with the working fluid filling the work tank.

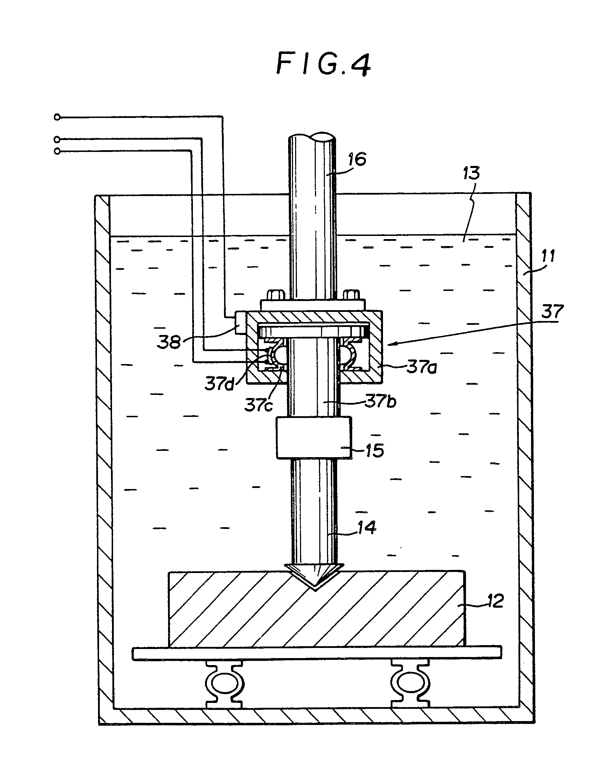

For example, as shown in Fig. 4, a weight measuring apparatus 37 is attached to the bottom of the stem 16 carrying the chuck 15 and the electrode 14 is attached thereto. The weight measuring apparatus 37 comprises a casing 37a, a piston 37b which can slide vertically in the casing, an annular measuring body 37c having a curved side wall, and a strain gauge 37d attached to the side of the measuring body 37c. The chuck 15 is attached to the bottom of the piston 37b and the electrode 14 is held thereby. The weight of the electrode 14 is transmitted to the measuring body 37c through the piston 37b causing the measuring body 37c to be deformed. Therefore, the weight of the electrode is measured by detecting and measuring this deformation using the strain gauge 37d. The measurement is carried out when the working operation is stopped temporarily, for example, when the electrode is at the upper dead point in its reciprocation. The output of the strain gauge 37d is fed to the microcomputer 33 in the same way as the output of the electronic balance 27 for measuring the weight of the electrode shown in Fig. 1, thereby allowing the control unit 32 to control the working conditions thereafter on the basis of the operational result. When the surface level of the working fluid 13 drops and, therefore, when portions of the weight measuring apparatus 37 and the electrode 14 are exposed above the surface of the working fluid, the buoyancy applied to them will be partially lost, and this causes the calculation of the weight of the electrode to be more complicated. Therefore, it is desirable to perform the measurement while the weight measuring apparatus 37 and the electrode 14 are always sunk in the working fluid. For this purpose, for example, a fluid surface level sensor 38 is preferably attached to the outer wall of the weight measuring apparatus 37 so that further working fluid can be supplied to the work tank 11 in response to the output from this sensor 38 when the working fluid drops below a predetermined level. On the other hand, detection by the weight measuring apparatus 37 may be carried out when the stem 16 and electrode 14 are raised up completely out of the working fluid 13 so that buoyancy does not apply at all.

As shown in Fig. 2 or 3, the weight of the workpiece can be measured while the workpiece is sunk in the working fluid, and furthermore, as shown in Fig. 4, the weight of the electrode can be measured without removing the electrode. With such a construction, therefore, the weights of both the workpiece and the electrode can be measured while continuing the spark erosion process and the working condition can be controlled properly on the basis of these measured values, so that a spark erosion machine with excellent work efficiency is provided.

The weight measuring apparatus for measuring the weights of the workpiece and the electrode are not limited to such apparatus as the electronic balances 9 and 27 shown in Fig. 1, the force measuring apparatus 34 shown in Fig. 2, the suspension-type force measuring apparatus 36 shown in Fig. 3 and the weight measuring apparatus 37 shown in Fig. 4. Other well-known balances and force measuring apparatus with high accuracy may be also used for the present invention. The principle of the present invention may be also applied to an electrolytic working machine.

With a spark erosion machine constructed as described above the working conditions can be properly selected and controlled on the basis of changes in the weights of the workpiece and the electrode to maintain better working conditions, thereby improving the working speed and accuracy.

**Claims**

1. A spark erosion machine, in which a working gap is formed between a working electrode (14) and a workpiece (12), a pulse discharge being generated in the working gap while working fluid (13) is supplied to the electrode and the workpiece (12), and the electrode (14) and the workpiece (12) are relatively moved to maintain the proper width of the working gap, characterised in that at least one weight measuring apparatus (27, 34, 36, 37) is provided for measuring the weight of the electrode (14) and/or the workpiece (12) and a control unit (32) is provided for selecting or controlling the working conditions in response to a signal from the weight measuring apparatus.

2. A spark erosion machine as claimed in claim 1, wherein the apparatus (27) for measuring the weight of the electrode include means (25) for removing the electrode (14) from the working location prior to weighing.

3. A spark erosion machine as claimed in claim 1, wherein the apparatus (37) for measuring the weight of the electrode (14) measures the weight thereof while the electrode is located in the working position.

4. A spark erosion machine as claimed in claim 1, wherein the apparatus for measuring the weight of the workpiece measures the weight of the workpiece and a work tank containing the workpiece.

5. A spark erosion machine as claimed in claim 1, wherein the apparatus (34, 36) for measuring the weight of the workpiece measures the weight of the workpiece while it is sunk in working fluid in a work tank.

**Revendications**

1. Machine d'usinage par étincelage, dans laquelle un jeu de travail se forme entre une électrode de travail (14) et une pièce à usiner (12), une décharge par impulsions étant générée dans le jeu de travail tandis que du fluide de travail (13) est envoyé sur l'électrode et sur la pièce à usiner (12), et dans laquelle l'électrode (14) et la pièce à usiner (12) se déplacent l'une par rapport à l'autre pour maintenir la valeur correcte du jeu de travail, caractérisée en ce qu'il est prévu au moins un appareil de mesure du poids (27, 34, 36, 37) pour mesurer le poids de l'électrode (14) et/ou de la pièce à usiner (12) ainsi qu'une unité de commande (32) pour sélectionner ou commander les conditions de travail en réponse à un signal provenant de l'appareil de mesure du poids.

2. Machine d'usinage par étincelage comme revendiquée dans la revendication 1, où l'appareil (27) de mesure du poids de l'électrode inclut des moyens (25) pour enlever l'électrode (14) de son emplacement de travail avant de la peser.

3. Machine d'usinage par étincelage comme revendiquée dans la revendication 1, où l'appareil (37) de mesure du poids de l'électrode (14) mesure son poids tandis que l'électrode est placée à sa position de travail.

4. Machine d'usinage par étincelage comme revendiquée dans la revendication 1, où l'appareil de mesure du poids de la pièce à usiner mesure le poids de la pièce à usiner et d'un réservoir de travail contenant la pièce à usiner.

5. Machine d'usinage par étincelage comme revendiquée dans la revendication 1, où l'appareil (34, 36) de mesure du poids de la pièce à usiner mesure le poids de la pièce à usiner tandis qu'elle est immergée dans le fluide de travail contenu dans un réservoir de travail.

**Patentansprüche**

1. Funkenerosionsmaschine, in welcher zwischen einer Arbeitselektrode (14) und einem Werkstück (12) ein Arbeitsspalt gebildet wird, wobei im Zuge der Zuleitung einer Arbeitsflüssigkeit (13) zur Elektrode und zu dem Werkstück (12) eine Impulsentladung in dem Arbeitsspalt erzeugt wird und wobei zur Beibehaltung der geeigneten Breite des Arbeitsspalts die Elektrode (14) und das Werkstück (12) relativ bewegt werden, dadurch gekennzeichnet, daß zumindest eine Gewichtsmeßvorrichtung (27, 34, 36, 37) zum Messen des Gewichts der Elektrode (14) und/oder des Werkstücks (12) vorgesehen ist und daß eine Steuereinheit (32) für die Wahl oder die Steuerung der Arbeitsbedingungen in Abhängigkeit von einem Signal aus der Gewichtsmeßvorrichtung vorgesehen ist.

2. Funkenerosionsmaschine nach Anspruch 1, dadurch gekennzeichnet, daß die Vorrichtung (27) zum Messen des Gewichts der Elektrode ein Element (25) für die Wegführung der Elektrode (14) aus der Arbeitsposition vor dem Wiegen aufweist.

3. Funkenerosionsmaschine nach Anspruch 1, dadurch gekennzeichnet, daß die Vorrichtung (37) zum Messen des Gewichts der Elektrode (14) deren Gewicht mißt, während sich die Elektrode in der Arbeitsposition befindet.

4. Funkenerosionsmaschine nach Anspruch 1, dadurch gekennzeichnet, daß die Vorrichtung zum Messen des Gewichts des Werkstücks das Gewicht des Werkstücks und eines das Werkstück enthaltenden Arbeitsbehälters mißt.

5. Funkenerosionsmaschine nach Anspruch 1, dadurch gekennzeichnet, daß die Vorrichtung (34, 36) zum Messen des Gewichts des Werkstücks dessen Gewicht mißt, während das Werkstück in die Arbeitsflüssigkeit in einem Arbeitsbehälter eingetaucht ist.

FIG. 1

0 093 026

# FIG. 2

# FIG. 3

# FIG.4